# EUROPEAN PATENT APPLICATION

(11) **EP 4 742 393 A1**
(43) Date of publication of application: **13.05.2026**
(21) Application number: 24862938.8
(22) Date of filing: 10.01.2024
(51) Int. Cl.: H01M 50/211, H01M 50/271, G01B 11/22

(54) **METHOD FOR MANUFACTURING BATTERY MODULE**

(30) Priority: 07.09.2023 KR 20230118998
(71) Applicant: SK On Co., Ltd., Seoul 03161 (KR)
(72) Inventor: KIM, Jae Hun, Daejeon 34124 (KR); OH, Yoon Sung, Daejeon 34124 (KR); LEE, Seung Won, Daejeon 34124 (KR); HONG, Min Jeong, Daejeon 34124 (KR)
(74) Representative: Prüfer & Partner mbB Patentanwälte · Rechtsanwälte
(86) International application number: PCT/KR2024/000490
(87) International publication number: WO 2025/053354

(57) **Abstract**

The present disclosure relates a battery module and a method for manufacturing the battery module, the method including an application process of applying an adhesive material to at least one surface of a battery cell unit, wherein a plurality of battery cells are stacked in the battery cell unit, and the battery cells comprise a cell assembly and a tab protruding from the cell assembly, and wherein in the application process, the adhesive material is applied to one side of the at least one battery cell from which the tab does not protrude.

## Description

### [Field]

The present disclosure relates to a method for manufacturing a battery module. In addition, the present disclosure relates to a battery module manufactured by the method and a method for manufacturing the battery module.

### [Background Art]

In recent years, the demand for mobile devices such as smartphones, tablet PCs, and wireless earphones has been increasing. In addition, as the development of electric vehicles, energy storage batteries, robots, satellites, etc. has accelerated, research on high-performance secondary batteries that can be repeatedly charged and discharged as an energy source is actively underway.

Currently commercialized secondary batteries include nickel-cadmium batteries, nickel-hydrogen batteries, nickel-zinc batteries, and lithium secondary batteries. Of them, lithium secondary batteries exhibit almost no memory effect compared to nickel-based secondary batteries, allowing for free charge and discharge, very low self-discharge rates, and high energy density.

### [Disclosure]

### [Technical Problem]

According to one aspect of the present disclosure, a method for manufacturing a battery module that can prevent process-induced defects and improve heat dissipation characteristics of the final product may be provided. Further, according to one aspect of the present disclosure, a method for manufacturing a battery module that can prevent an adhesive material from entering between battery cells, thereby preventing process-induced defects and improving the safety of the final product may be provided. Further, according to one aspect of the present disclosure, a battery module manufactured by the method for manufacturing the battery module, and a battery pack and an electrical device including the battery module may be provided.

The method for manufacturing the battery module according to one aspect of the present disclosure may be widely applied in the fields of electric vehicles, battery charging stations, and other green technologies such as photovoltaics and wind power using batteries. In addition, the method for manufacturing the battery module according to one aspect of the present disclosure may be used in eco-friendly electric vehicles and hybrid vehicles to prevent climate change by suppressing air pollution and greenhouse fluid emissions.

### [Technical Solution]

A method for manufacturing a battery module according to an aspect of the present disclosure may include an application process of applying an adhesive material to at least one surface of a battery cell unit, wherein a plurality of battery cells are stacked in the battery cell unit, and the battery cells each comprise a cell assembly and at least one tab protruding from the cell assembly, and wherein in the application process, the adhesive material is applied to one side of the at least one battery cell from which the at least one tab does not protrude.

In a method for manufacturing a battery module according to an aspect of the present disclosure, in the application process, the adhesive material may be applied to form an applied area on at least a portion of a central region of the one side of the at least one battery cell.

In a method for manufacturing a battery module according to an aspect of the present disclosure, in the application process, the adhesive material may be applied to form an adhesive free area on at least a portion of a region of both ends of the one side of the at least one battery cell.

In a method for manufacturing a battery module according to an aspect of the present disclosure, the one side of the at least one battery cell may include a depression, and at least a portion of the depression may be present in the applied area.

In a method for manufacturing a battery module according to an aspect of the present disclosure, the central region of the one side of the at least one battery cell may be formed in the depression.

In a method for manufacturing a battery module according to an aspect of the present disclosure, the method may further include obtaining a profile of the one side of the at least one battery cell, and the application process may include determining the amount of adhesive material to be applied according to the obtained profile.

In a method for manufacturing a battery module according to an aspect of the present disclosure, the profile of the one side of the at least one battery cell may be obtained by laser irradiation.

In a method for manufacturing a battery module according to an aspect of the present disclosure, obtaining the profile may further include deriving a central region of the one side of the at least one battery cell.

In a method for manufacturing a battery module according to an aspect of the present disclosure, the method may further include an insertion process of inserting the battery cell unit with the adhesive material applied thereto into a module housing.

In a method for manufacturing a battery module according to an aspect of the present disclosure, the module housing may include a support plate supporting the battery cell unit and side plates provided at both edge regions of the support plate, and in the insertion process, the battery cell unit may be inserted into the module housing with the side plates of the module housing spread apart.

In a method for manufacturing a battery module according to an aspect of the present disclosure, each of the side plates of the module housing may include an elastic body with an elastic limit, and in the insertion process, the side plates may be spread apart by pulling the side plates within elastic limits, and the battery cell unit with the adhesive material applied thereto may be inserted into the module housing with the side plates spread apart.

In a method for manufacturing a battery module according to an aspect of the present disclosure, in the insertion process, the battery cell unit may be inserted into the module housing while at least two faces of the battery cell unit are pressed.

In a method for manufacturing a battery module according to an aspect of the present disclosure, in the insertion process, the pressing may be released when the pressed battery cell unit contacts the side plates.

In a method for manufacturing a battery module according to an aspect of the present disclosure, the adhesive material may include one or more selected from the group consisting of silicone resin, acrylic resin, urethane resin, and epoxy resin.

A battery module according to an aspect of the present disclosure may be manufactured by the method of manufacturing the battery module according to an aspect of the present disclosure.

A battery pack according to an aspect of the present disclosure may include at least one battery module, and the battery module may be a battery module according to an aspect of the present disclosure. In addition, an electrical device according to an aspect of the present disclosure may include one or more selected from the group consisting of at least one battery module and at least one battery pack, the battery module may be a battery module according to an aspect of the present disclosure, and the battery pack may be a battery pack according to an aspect of the present disclosure.

### [Advantageous Effects]

According to an embodiment of the present disclosure, process-induced defects can be prevented and the heat dissipation characteristics of the final product can be improved. Further, according to one aspect of the present disclosure, an adhesive material can be prevented from entering between battery cells, thereby preventing process-induced defects and improving the safety of the final product.

### [Description of Drawings]

The drawings in the present disclosure are in accordance with examples of the present disclosure, and the proportions of the widths or thicknesses (or heights) of the respective configurations are to illustrate the present disclosure in detail, and these proportions may vary in practice. Also, in the coordinate system shown in the drawings, each axis may be perpendicular to the other, and the direction pointed by an arrow may be in a + direction and a direction opposite (180 degree rotation) to the direction pointed by the arrow may be in a - direction.
FIG. 1 is an exemplary diagram of a structure of a portion of a battery cell according to one aspect of the present disclosure.
FIG. 2 is an exemplary diagram of a structure of a battery module according to one aspect of the present disclosure.
FIG. 3 is an exemplary diagram of a structure of a battery pack according to one aspect of the present disclosure.
FIG. 4 is an exemplary diagram illustrating a structure of a battery cell unit according to one aspect of the present disclosure.
FIG. 5 is a diagram illustrating at least a portion of an application process of a method for manufacturing a battery module according to one aspect of the present disclosure.
FIG. 6 is a diagram illustrating at least a portion of an application process of a method for manufacturing a battery module according to one aspect of the present disclosure.
FIG. 7 is a diagram illustrating at least a portion of an application process of a method for manufacturing a battery module according to one aspect of the present disclosure.
FIG. 8 is an exemplary diagram of a structure of a battery cell according to one aspect of the present disclosure.
FIG. 9 is a diagram illustrating at least a portion of a process of obtaining a profile of a method for manufacturing a battery module according to one aspect of the present disclosure.
FIG. 10 is a diagram illustrating at least a portion of an application process of a method for manufacturing a battery module according to one aspect of the present disclosure.
FIG. 11 is a diagram illustrating at least a portion of an application process of a method for manufacturing a battery module according to one aspect of the present disclosure.
FIG. 12 is a diagram illustrating at least a portion of an insertion process of a method for manufacturing a battery module according to one aspect of the present disclosure.
FIG. 13 is a diagram illustrating at least a portion of an insertion process of a method for manufacturing a battery module according to one aspect of the present disclosure.
FIG. 14 is a diagram illustrating at least a portion of an insertion process of a method for manufacturing a battery module according to one aspect of the present disclosure.
FIG. 15 is a diagram illustrating at least a portion of an insertion process of a method for manufacturing a battery module according to one aspect of the present disclosure.
FIG. 16 is a diagram illustrating a semi-finished product of a battery module manufactured by a method for manufacturing a battery module according to one aspect of the present disclosure.
FIG. 17 is a computed tomography (CT) image of a bottom surface of a semi-finished battery module manufactured by a method for manufacturing a battery module according to one aspect of the present disclosure (a cross-section AA' of FIG. 16).

### [Modes of the Invention]

The present disclosure will now be described in detail with reference to the accompanying drawings. However, these are exemplary only and do not limit the present disclosure to the specific embodiments illustrated.

Where physical properties mentioned in this specification are affected by measured temperature and/or pressure, the corresponding physical properties are those measured at room temperature and normal pressure, unless otherwise specifically provided.

As the handling of heat generated from batteries in electrical appliances, electronics, or secondary batteries has become an important issue, various heat dissipation measures have been proposed. For example, a battery module may include a heat-dissipating adhesive layer that secures battery cells and efficiently transfers the heat generated by the battery cells to the outside.

In one example, a battery module is manufactured by applying a heat-dissipating adhesive to a lower inner surface of a module case and attaching a plurality of battery cells to the applied adhesive.

In addition, a battery module may be manufactured by arranging a plurality of battery cells side by side and stacking the battery cells in a horizontal direction to assemble the stacked battery cells in the form of a battery cell unit, and then inserting the assembled battery cell unit into a module case. Here, the battery module is manufactured by pressing at least two faces of the battery cell unit to minimize the space between the battery cells, inserting the battery cell unit into the module case, and releasing the pressure to minimize the volume of the battery module.

However, when the heat-dissipating adhesive is applied to the lower inner surface of the module case, and the battery cell unit with both faces pressed as described above comes into contact with the heat-dissipating adhesive, the battery cell may be displaced if the pressing force is released, which may cause the heat-dissipating adhesive to become asymmetrically applied. In this case, unnecessary use of the heat-dissipating adhesive may be caused, or the heat-dissipating adhesive may be inserted into the space between the battery cells.

According to one aspect of the present disclosure, a method for manufacturing a battery module that can prevent process-induced defects and improve heat dissipation characteristics of the final product may be provided. Further, according to one aspect of the present disclosure, a method for manufacturing a battery module that can prevent an adhesive material 200 from entering between battery cells 1, thereby preventing process-induced defects and improving the safety of the final product may be provided. Further, according to one aspect of the present disclosure, a battery module 2 manufactured by the above method for manufacturing the battery module, and an electrical device including at least one selected from the group consisting of an electrical device and a battery pack 3 including the battery module 2.

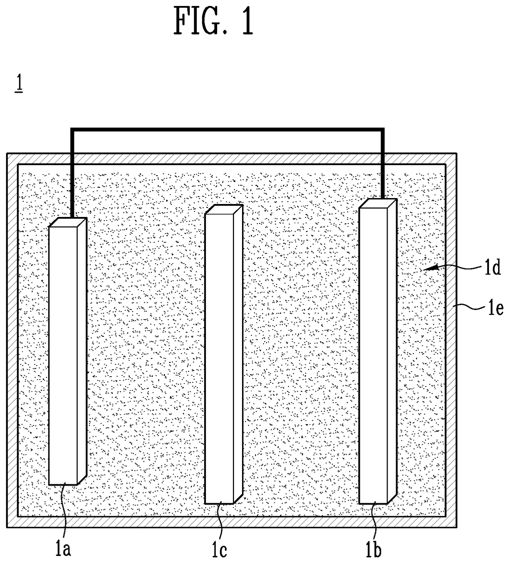

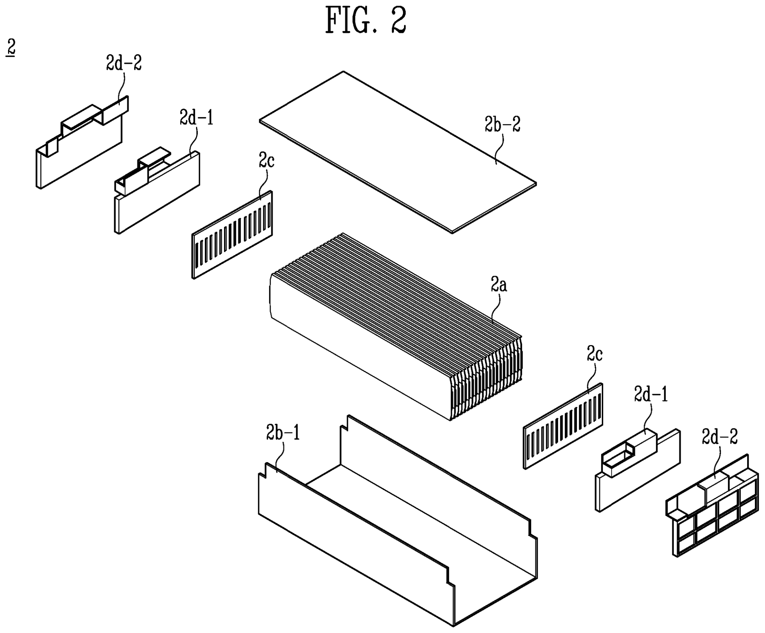

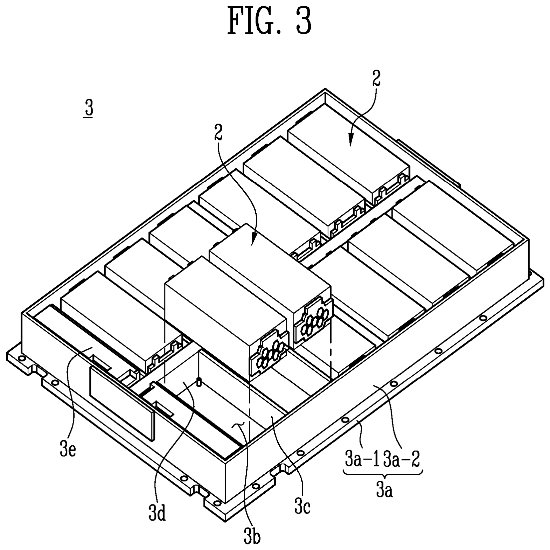

FIG. 1 is an exemplary diagram illustrating a structure of a portion of a battery cell 1 according to one aspect of the present disclosure. FIG. 2 is an exemplary diagram illustrating a structure of the battery module 2 according to one aspect of the present disclosure. FIG. 3 is an exemplary diagram of a structure of the battery pack 3 according to one aspect of the present disclosure.

The structure of the battery cell 1 according to one aspect of the present disclosure may be known in the art. The battery cell 1 may include an electrode assembly and an electrolyte solution 1d. Referring to FIG. 1, the electrode assembly may include a cathode 1a, an anode 1b, and a separator 1c. In addition, referring to FIG. 1, the battery cell 1 may have a structure including the cathode 1a and the anode 1b with the separator 1c interposed between the cathode 1a and the anode 1b. Furthermore, the battery cell 1 may have a structure filled with the electrolyte solution 1d in a space enclosed by an exterior material 1e of the battery cell.

The cathode 1a may refer to a reduction electrode where an electron transfer material receives electrons when the battery cell 1 is discharged. The anode 1b may refer to an oxidation electrode where the electron transfer material transfers electrons when the battery cell 1 is discharged. Furthermore, the separator 1c may mean a layer through which the electron transfer material passes while preventing an electrical short circuit between the cathode 1a and the anode 1b. Furthermore, the electrolyte solution 1d may mean a medium which causes the movement of the electron transfer material to occur so as to facilitate an electrochemical reaction between the cathode 1a and the anode 1b.

While FIG. 1 illustrates the electrolyte solution 1d in a liquid state, a solid-state electrolyte, such as a gel type polymer electrolyte as described above, may also be used. A battery using a solid-state electrolyte is generally referred to as a solid battery or an all-solid battery. Liquid-state electrolytes (electrolyte solutions) generally include organic solvents and lithium salts.

The battery may be classified variously depending on the type of electron transfer material. For example, when the electron transfer material is lithium (Li, containing ions), the battery may be referred to as a lithium-ion battery.

Furthermore, the exterior material 1e of the battery cell may protect the cathode 1a, the anode 1b, and the separator 1c from external impact and prevent the electrolyte solution 1d from leaking out. Depending on the shape of the exterior material 1e of the battery cell, the battery cell 1 may be classified as a prismatic type, a cylindrical type, or a pouch type. In the present disclosure, the battery cell 1 may preferably be a pouch type cell.

The battery module 2 according to one aspect of the present disclosure may be manufactured by the method for manufacturing the battery module according to one aspect of the present disclosure. Furthermore, the structure of the battery module 2 may be known in the art. Referring to FIG. 2, the battery module 2 may have a structure including a battery cell unit 2a, upper and lower housings 2b-1 and 2b-2, a busbar 2c, and inner and outer covers 2d-1 and 2d-2.

The battery module 2 may include a structure in which one or more battery cells 1 are received in a housing to protect the battery cells from external shocks, heat and vibration, and the like.

The battery cell unit 2a may include one or more battery cells 1. When the battery cell unit 2a includes a plurality of battery cells, the battery cell unit 2a may have a structure in which the battery cells 1 are electrically connected in series and/or in parallel. The battery cell unit 2a may be embedded in the space formed by the lower housing 2b-1 and the upper housing 2b-2. However, the manner in which the battery cell unit 2a is embedded is not limited to that shown in FIG. 2. The battery cell unit 2a may be a battery cell unit 100 according to one aspect of the present disclosure.

Furthermore, as used herein, the term 'electrically connected' may mean that objects when connected by a connecting means form an electrical circuit so that current may flow through each of the objects being connected. The connecting means is not particularly limited as long as an electrical connection is possible. For example, a direct contact may be made between the objects being connected, or a wire through which current flows may be used. A plurality of battery cells 1 may be electrically connected to each other in series, in parallel, or in a combination thereof.

Meanwhile, the battery cell 1 may include tabs 12. The battery cell 1 may specifically include a cathode tab extending from the cathode and an anode tab extending from the anode. The tab 12 may be a collective term for a cathode tab and an anode tab. The battery cell unit 2a may have a structure in which cathode tabs and anode tabs protrude in a number corresponding to the number of battery cells 1 included. The cathode and anode tabs may be electrically connected to the busbar 2c having slits, respectively. The cathode and anode tabs may be inserted into the slits of the busbar 2c so as to be electrically connected to the busbar 2c. Further, the battery module 2 may include an inner cover 2d-1 and an outer cover 2d-2 so as to cover the busbar 2c and the battery cell unit 2a.

The structure of the battery pack 3 according to one aspect of the present disclosure may be known in the art. Referring to FIG. 3, the battery pack 3 may include one or more battery modules 2 and electrical components 3e, such as various control devices such as a BMS on a mounting surface 3b formed inside a pack housing 3a.

The battery pack 3 may include one or more selected from the group consisting of the battery cells 1 and the battery module 2, and may include a structure equipped with various control and protection systems, such as a battery management system (BMS) and a cooling system.

The battery pack 3 may include the battery cells 1 instead of the battery module 2. In this case, the battery pack may be a so-called cell to pack.

The battery pack 3 may include a plurality of configurations to ensure structural rigidity of the pack housing 3a. The battery pack 3 may include a crossmember 3d protruding from a tray 3a-1 of the pack housing 3a across the entirety of the tray 3a-1 to connect opposing sidewall portions 3a-2 of the pack housing 3a. Further, the battery pack 3 may include a partition wall 3c protruding from the tray 3a-1 of the pack housing 3a to connect the crossmember 3d to the sidewall portions 3a-2.

An electrical device according to one aspect of the present disclosure may include one or more selected from the group consisting of one or more battery modules 2 and one or more battery packs 3 according to one aspect of the present disclosure. The electrical device may refer to a device which operates through power generated by battery cells 1 or the like. The electrical device may be, for example, a cell phone, a home appliance, an electric vehicle, a hybrid vehicle, or an energy storage system (ESS).

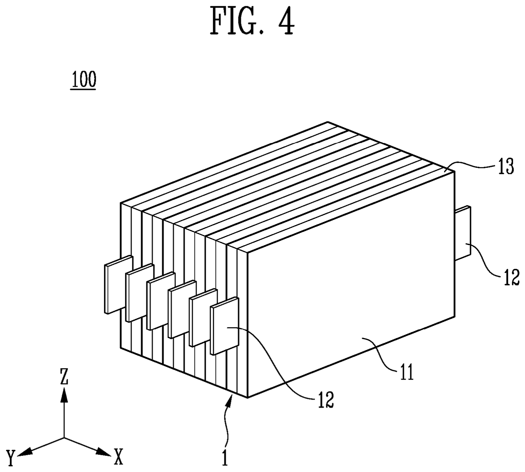

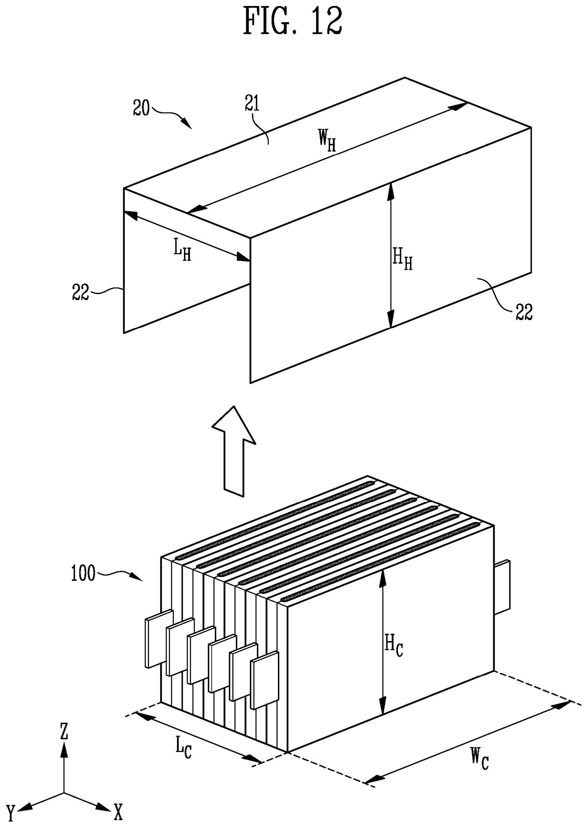

A method for manufacturing a battery module according to one aspect of the present disclosure is characterized in that the battery cell unit 2a is inserted into the lower housing 2b-1. The battery cell unit 2a may be the battery cell unit 100 (see FIG. 4) according to one aspect of the present disclosure. Furthermore, the lower housing 2b-1 may be referred to as a module housing 20 in the present disclosure, and the module housing 20 may include a support plate 21 and side plates 22 (see FIG. 12).

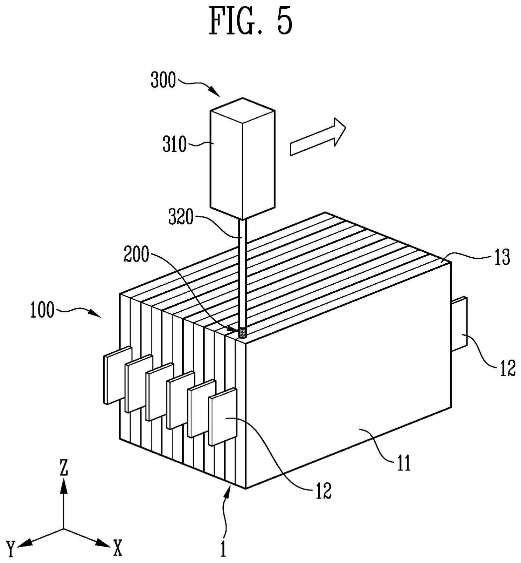

Furthermore, the method for manufacturing the battery module according to one aspect of the present disclosure is characterized by a method of applying the adhesive material 200 (see FIG. 5). In particular, a heat dissipation countermeasure is required in the battery module 2 for reasons as mentioned above. Generally, as the heat dissipation countermeasure, a heat-dissipating adhesive is formed by applying a heat dissipation material to the adhesive material used for securing the battery cell 1. However, the battery module 2 has been manufactured by applying the heat-dissipating adhesive to the inner surface of the module housing 20 and inserting the battery cell unit 2a thereon, and such manufacturing method has various issues. Accordingly, a method for manufacturing a battery module according to an aspect of the present disclosure may improve the above method.

FIG. 4 is an exemplary diagram illustrating the structure of the battery cell unit 100 according to one aspect of the present disclosure. In addition, FIG. 5 is a diagram illustrating at least a portion of the application process of the method for manufacturing the battery module according to one aspect of the present disclosure.

The method for manufacturing the battery module according to one aspect of the present disclosure may include an application process of applying the adhesive material 200 to at least one surface of the battery cell unit 100. Further, the battery cell unit 100 may include one or more battery cells 1. In another example, the battery cell unit 100 may include the plurality of battery cells 1. In this case, the battery cell unit 100 may include a structure in which the battery cells 1 are electrically connected in series and/or parallel to each other.

In the method for manufacturing the battery module according to one aspect of the present disclosure, the battery cell unit 100 may include the plurality of battery cells 1, and may include a structure in which the plurality of battery cells 1 are stacked. In other words, the battery cell unit 100 may include a structure in which the plurality of battery cells 1 are stacked.

In the method for manufacturing the battery module according to one aspect of the present disclosure, the battery cell unit 100 may have the plurality of battery cells 1 stacked on top of each other. Furthermore, the battery cell unit 100 may have a structure in which the plurality of battery cells 1 are electrically connected in series and/or in parallel (see FIG. 4). More specifically, the battery cell unit 100 may include a structure in which the plurality of battery cells 1 are arranged side by side and stacked in the horizontal direction.

Furthermore, in the method for manufacturing the battery module according to one example of the present application, the battery cell 1 may include a cell assembly 11 and the tabs 12 protruding from the cell assembly 11 (see FIG. 4).

The cell assembly 11 may include an electrode assembly embedded in an interior space formed through the exterior material 1e of the battery cell, and may also include the electrolyte solution 1d filled in the interior space (see FIG. 1).

The tabs 12 may be made of a material which may be electrically connected to a current collector of a predetermined electrode (a cathode or an anode) within the cell assembly 11 without physically and chemically affecting the current collector. Further, the tabs 12 may be made of the same material as the current collector of each electrode within the cell assembly 11. Further, the tabs 12 may be electrically connected to the electrode assembly and have an extension structure, and the extension structure may protrude from the cell assembly 11 as described above. Furthermore, the tabs 12 may specifically include a cathode tab and an anode tab, the cathode tab may have an extension structure in electrical connection with the cathode 1a of the electrode assembly, and the anode tab may have an extension structure in electrical connection with the anode 1b of the electrode assembly.

In the present disclosure, when the plurality of battery cells 1 are arranged side by side and stacked in the horizontal direction, it may mean that the tabs 12 of the battery cell 1 may face each other in the same direction as shown in FIG. 4 and be stacked in the horizontal direction (i.e., in an x-axis direction in FIG. 4).

In the present disclosure, the tabs 12 may protrude from the cell assembly 11. Referring to FIG. 4, the battery cell 1 includes the cell assembly 11 and two tabs 12. The two tabs 12 protrude from the cell assembly 11, but the directions in which the respective tabs 12 protrude may point in opposite directions. That is, in FIG. 4, one tab 12 may protrude in a +y direction and the other tab 12 may protrude in a -y direction. The number of tabs 12 and the directions in which the tabs 12 protrude are not particularly limited, and the protruding directions of two tabs 12 may point in the same direction as each other.

In the method for manufacturing the battery module according to one aspect of the present disclosure, the adhesive material 200 may include an adhesive component. The adhesive component may include one or more selected from the group consisting of silicone resin, acrylic resin, urethane resin, and epoxy resin. On the other hand, the adhesive material may include an adhesive component which is itself thermally conductive. The thermally conductive adhesive component may include, for example, at least one resin having a thermal conductivity of at least 0.1 W/mK. The thermal conductivity may be measured, for example, with a hot disk measuring instrument according to the specifications of ISO22007-2.

In addition, the adhesive material 200 may have adhesive properties by itself. In another example, the adhesive material 200 may not have adhesive properties by itself, but may be cured or polymerized to obtain adhesive properties through a curing or polymerization reaction. In this case, the method for manufacturing the battery module may include a process of performing the curing or polymerization reaction after the adhesive material 200 is applied.

Further, the adhesive material 200 may include one or more selected from the group consisting of a flame retardant material and a heat dissipating material. The flame retardant material may impart flame retardant properties to the adhesive material 200. The flame retardant material may be any of the various known flame retardants without limitation. The flame retardant may be a halogen flame retardant including a halogen element (an inclusive term covering F, Cl, Br, and I), or a non-halogen flame retardant including no halogen elements, or a phosphorus flame retardant including phosphorus (P), or an inorganic flame retardant exemplified by a metal oxide (e.g., aluminum hydroxide). The heat dissipating material may impart heat dissipating properties to the adhesive material 200. Various heat dissipating materials known in the art may be used as the heat dissipating material without limitation. As the heat dissipating material, ceramic fillers such as aluminum oxide, aluminum hydroxide, magnesium oxide, magnesium hydroxide, and boron nitride may be used.

According to the method for manufacturing the battery module according to one aspect of the present disclosure, during the application process, the adhesive material 200 may be applied to the one side 13 of the at least one battery cell 1. Here, the one side 13 of the at least one battery cell 1 may also be referred to as the side 13 to be applied in the present description. The one side 13 of the at least one battery cell 1 may be one of the faces on which the tabs 12 of the battery cell 1 do not protrude. The one side 13 of the at least one battery cell 1 may be a so-called bottom surface of the battery cell 1. Referring to FIG. 4, an example of the one side 13 of the at least one battery cell 1 is shown.

In the application process of the method for manufacturing the battery module according to one aspect of the present disclosure, the side 13 to be applied of each battery cell 1 including the battery cell unit 100 may ultimately form a side to be applied of the battery cell unit 100. In the application process, the adhesive material 200 may be applied to at least a portion of the side to be applied of the battery cell unit 100. More specifically, the adhesive material 200 may be applied to at least a portion of the side 13 to be applied of each of the battery cells 1 constituting the battery cell unit 100 as described above.

In the application process of the method for manufacturing the battery module according to one aspect of the present disclosure, the adhesive material 200 may be applied by an application device 300 (see FIG. 5). The application device 300 may include a receiving portion 310 for receiving the adhesive material 200 and a discharge portion 320 for discharging the adhesive material 200 received in the receiving portion to the outside. The adhesive material 200 may naturally flow due to gravity and be discharged, or may be discharged through a discharge device such as a pump.

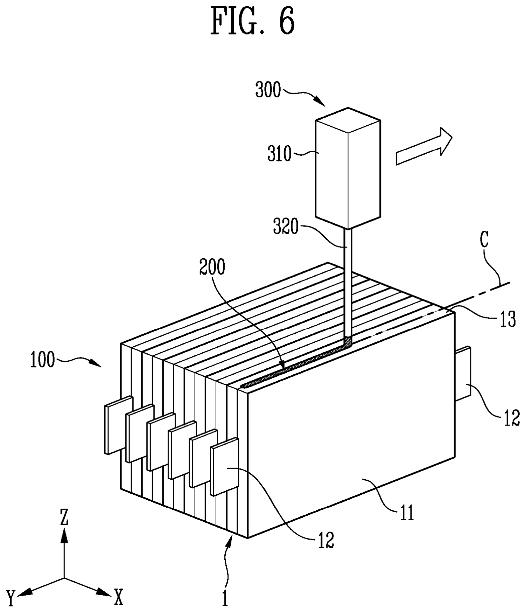

Referring to FIG. 5, the application device 300 is applying the adhesive material 200 to the one side 13 of at least one battery cell 1. The application device 300 may be movable. Though not shown in FIG. 6, the application device 300 may be movable through a movement device such as a transfer rail. Further, the applicator 300 may be free to move in any direction, including the x, y, and z axes, as well as in an oblique direction, and the directions of movement are not particularly limited.

FIG. 6 is a diagram illustrating at least a portion of an application process of a method for manufacturing a battery module according to one aspect of the present disclosure. Referring to FIG. 6, the application device 300 may be applying the adhesive material 200 along the side 13 to be applied of one battery cell 1. In addition, referring to FIG. 6, the application device 300 may move in the -y direction along the side 13 to be applied and continuously apply the adhesive material 200 as the application device 300 moves.

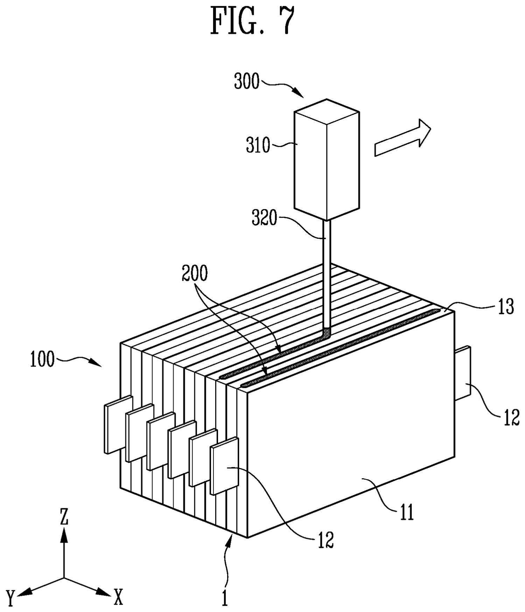

FIG. 7 is a diagram illustrating at least a portion of the application process of a method for manufacturing a battery module according to one aspect of the present disclosure. Once the application device 300 applies the adhesive material 200 to the side 13 to be applied of one battery cell 1, the adhesive material 200 may be applied to the side to be applied 13 of the next battery cell 1. Referring to FIG. 7, after the adhesive material 200 is applied to one battery cell 1, the adhesive material 200 may be applied to the next battery cell 1. Here, the application device 300 may apply the adhesive material 200 while being moved in the -y direction when applying the adhesive material 200 to the next battery cell 1 in the same manner as when applying the adhesive material 200 to the previous battery cell 1 (see FIG. 7). However, without being limited thereto, the application device 300 may also apply the adhesive material 200 while being moved in the +y direction when applying the adhesive material 200 to the next battery cell 1.

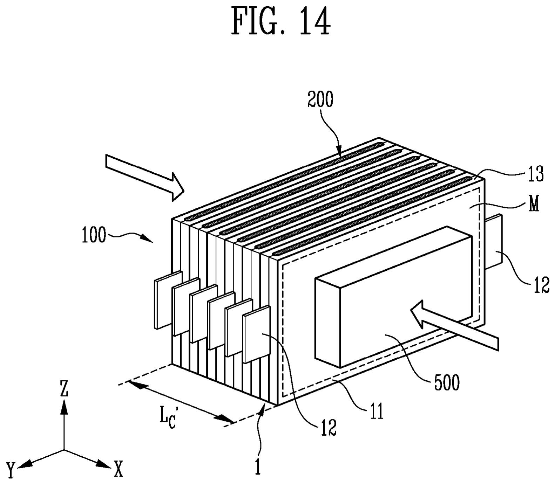

When the adhesive material 200 is applied to the battery cell unit 100 in the manner described above, the adhesive material 200 is all applied to the side 13 to be applied of the at least one battery cell 1. Referring to FIG. 14, the battery cell unit 100 in a state in which the adhesive material 200 is all applied to the side 13 to be applied of the at least one battery cell 1 may be seen.

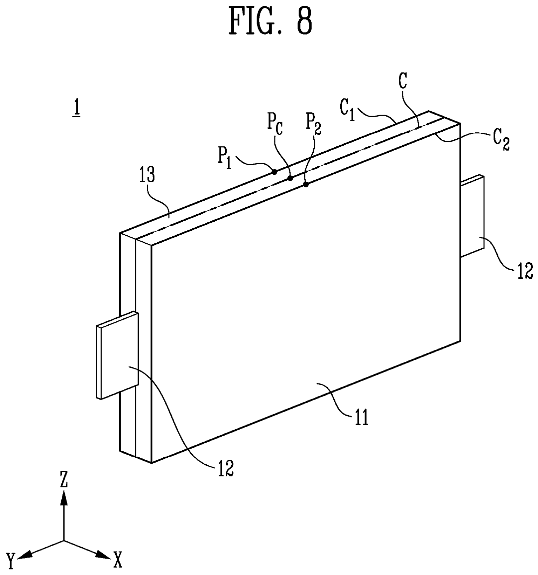

The method for manufacturing the battery module according to one aspect of the present disclosure may include, in the application process, applying the adhesive material 200 such that an applied area AC may be formed in at least a portion of a central region C of the one side 13 of at least one battery cell 1 (see FIGS. 8 and 12). Furthermore, the method for manufacturing the battery module according to one aspect of the present disclosure may include, in the application process, applying the adhesive material 200 such that an adhesive free area AD may be formed on at least a portion of a region of both ends C1 and C2 of the one side 13 of at least one battery cell 1 (see FIGS. 8 and 12).

FIG. 8 is an exemplary diagram illustrating a structure of a battery cell according to one aspect of the present disclosure. Referring to FIG. 8, one battery cell 1 including the battery cell unit 100 may be shown. Referring to FIG. 8, the central region C of the side 13 to be applied of the battery cell 1 may be shown.

Referring to FIG. 8, the one side 13 of the at least one battery cell 1 may include a first line C1 which is one of the two ends and a second line C2 which is the other end. Here, a point P2 of the second line C2 may be derived at a vertical distance from a point P1 of the first line C1. Here, a center point PC may refer to a point at which the distance between the point P1 of the first line C1 and the center point PC and the distance between the point P2 of the second line C2 and the center point PC are equal, while being on the vertical distance. Further, the central region C may be a set of center points PC throughout the first line C1 and the second line C2. In other words, the central region C may mean a line centered at the vertical distance from the first line C1 and the second line C2. As used herein, the term 'vertical distance' may refer to an imaginary line perpendicular (90 degrees) to a point P on one line L. Referring to FIG. 8, the central region C of the one side 13 of the at least one battery cell 1 according to one aspect of the present disclosure is shown.

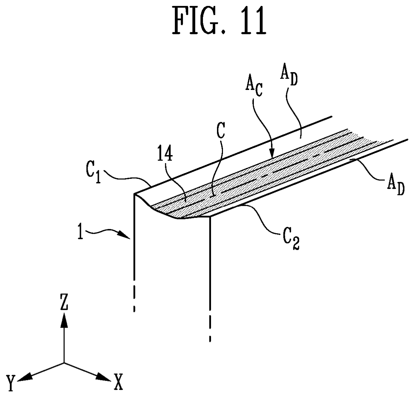

The method for manufacturing the battery module according to one aspect of the present disclosure may include, in the application process, applying the adhesive material 200 so as to cover the central region C of the one side 13 of the at least one battery cell 1, and form the applied area AC. Furthermore, the adhesive material 200 may not be applied to the entirety of the one side 13 of the at least one battery cell 1, but may be applied such that the adhesive free area AD may be formed, and the adhesive free area AD may include both ends C1 and C2 of the one side 13 of the at least one battery cell 1. Referring to FIG. 11, the adhesive material 200 may be applied to include the central region C of the one side 13 of the at least one battery cell 1, so that the applied area AC may be formed. Furthermore, referring to FIG. 11, the adhesive material 200 is not applied to some areas from both ends C1 and C2 to form the adhesive free area AD.

The method for manufacturing the battery module according to one aspect of the present disclosure may prevent the material 200 from entering between the battery cells 1 by forming the applied area AC and the adhesive free area AD on the one side 13 of the least one battery cell 1 as described above. Furthermore, by preventing the adhesive material 200 from entering between the battery cells 1, process failures may be prevented and the safety of the final product, i.e., the battery module may be improved.

The method for manufacturing the battery module according to one aspect of the present disclosure may further include a process of obtaining a profile of the one side 13 of the at least one battery cell 1. The process of obtaining the profile of the one side 13 of the at least one battery cell 1 may be performed prior to the application process. As used herein, the term 'profile' may refer to a three-dimensional representation of the shape of the one side 13 of the at least one battery cell 1. From the profile, the two ends C1 and C2 and the central region C of the one side 13 of the at least one battery cell 1 may be derived, a curvature or depression between the two ends C1 and C2 may also be derived, and the degree of the curvature or depression may be derived based on the depth and width.

The method for manufacturing the battery module according to one aspect of the present disclosure may include determining the amount of the adhesive material 200 to be applied according to the profile obtained based on the process of obtaining the profile of the one side 13 of the at least one battery cell 1. In other words, in the method for manufacturing the battery module, the application process may be performed according to the obtained profile.

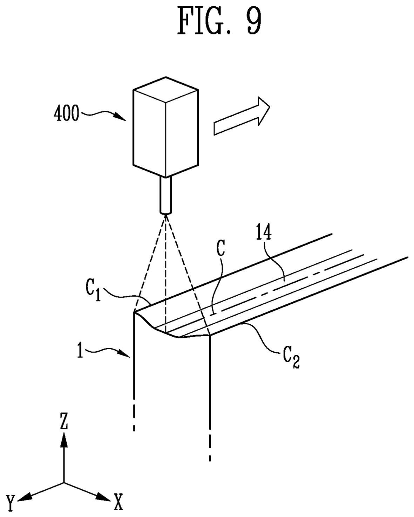

In the process of acquiring the profile of the one side 13 of the at least one battery cell 1, the process of acquiring the profile may be, but is not particularly limited to, performed by utilizing a vision device or the like. Furthermore, the profile may be acquired with a laser 410 emitted through a laser device 400 (see FIG. 9).

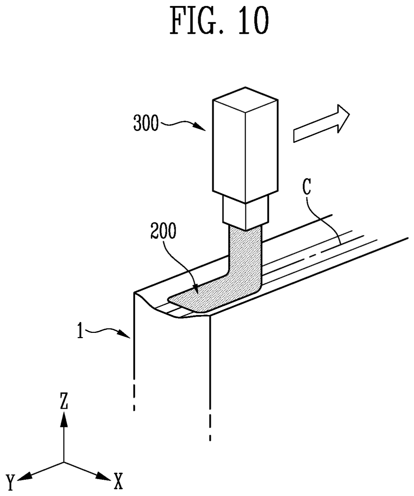

FIG. 9 is a diagram illustrating at least a portion of a process of obtaining a profile of a method for manufacturing a battery module according to one aspect of the present disclosure. Referring to FIG. 9, the process of obtaining the profile of the one side 13 of the at least one battery cell 1 may use the laser 410 emitted through the laser device 400. In other words, the process of obtaining the profile may be performed by irradiation of the laser 410. Here, the type and intensity of the laser device 400 are not particularly limited and may be appropriately determined for acquiring the profile. The laser device 400 may be movable. Though not shown in FIG. 10, the laser device 400 may be movable via a movement device such as a transfer rail. Further, the laser device 400 may be free to move in any direction, including the x-axis, y-axis, and z-axis, as well as in an oblique direction, and the directions of movement are not particularly limited.

Meanwhile, the laser device 400 may include a laser output part, a laser recognition part, and a data control part. The laser output part may be configured to output the laser 410. Further, the laser recognition part may be configured to recognize the laser 410 when the laser 410 emitted by the output part comes into contact with an external material and recognizes the reflected laser 410. Further, the data control part may be configured to derive and calculate a profile according to a predetermined logic based on the output laser 410 and the reflected and recognized laser 410. The predetermined logic may be designed from the position and distance information of the two ends C1 and C2 and the degree of the curvature or depression as obtained through the laser 410.

Referring to FIG. 9, the laser device 400 may derive a profile of the one side 13 of the at least one battery cell 1 while moving along the one side 13 of the at least one battery cell 1 through the irradiation with the laser 410. Furthermore, the laser device 400 may derive a profile including the central region C of the one side 13 of the at least one battery cell 1 by the laser 410. The central region C of the one side 13 of the at least one battery cell 1 may be calculated and derived according to the method described above (see FIG. 9), based on the position and distance information of the two ends C1 and C2 obtained by irradiating the laser 410. In other words, the method described above for deriving the central region C may be one of the predetermined logics.

In a method for manufacturing a battery module according to one aspect of the present disclosure, the one side 13 of the at least one battery cell 1 may include a depression 14. The depression 14 may be formed during assembly of the battery cell 1. Referring to FIG. 9, the one side 13 of the at least one battery cell 1 includes the depression 14 in at least some areas.

In the process of obtaining the profile of the one side 13 of the at least one battery cell 1 of the method for manufacturing the battery module according to one aspect of the present disclosure, the laser device 400 may derive, via the laser 410, the depression degree of the depression 14 of the one side 13 of the at least one battery cell 1. The laser device 400 may derive data about the degree of depression based on the width and height of the depression 14. Referring to FIG. 9, the laser device 400 may derive data about the depression 14 formed on the one side 13 of the at least one battery cell 1. Based on the data about the depression 14, the amount of the adhesive material 200 to be ejected by the application device 300 may be determined.

In a battery module according to one aspect of the present disclosure, the application device 300 and the laser device 400 may be in communication with each other. The laser device 400 may communicate the data about the profile derived by the laser device 400 as well as the depression 14 to the application device 300. To this end, the application device 300 and the laser device 400 may include a transceiver capable of transmitting and receiving the data. The application device 300 may determine the amount of the adhesive material 200 to be applied based on the data about the profile and the depression 14 received from the laser device 400. In addition, an operation part may be further included for this determination. Furthermore, the communication connection method is not particularly limited and may be any method known in the art.

Meanwhile, the application device 300 may determine the amount of application of the adhesive material 200 based on the profile received from the laser device 400 even when there is no depression 14 on the one side 13 of the at least one battery cell 1. Furthermore, the application device 300 may separately receive the profile obtained from the laser device 400 and the data about the depression 14 in a hardware configuration, even when the application device 300 is not in communication with the laser device 400.

In the method for manufacturing the battery module according to one aspect of the present disclosure, at least a portion of the depression 14 may be within the applied area AC. In other words, the adhesive material 200 may be applied to at least a portion of the depression 14. Further, the central region C of the one side 13 of the at least one battery cell 1 may be formed in the depression 14. That is, the adhesive material 200 may be applied to the central region C formed in the depression 14 (see FIG. 10).

FIG. 10 is a diagram illustrating at least a portion of an application process of a method for manufacturing a battery module according to one aspect of the present disclosure. Referring to FIG. 10, the adhesive material 200 is applied by the application device 300 to an area including the central region C formed in the depression 14. Here, the application device 300 may determine where to apply the adhesive material 200 by the above-described profile, and may determine the amount of application based on the above-described data about the depression 14.

FIG. 11 is a diagram illustrating at least a portion of an application process of a method for manufacturing a battery module according to one aspect of the present disclosure. Referring to FIG. 11, the adhesive material 200 is applied to the one side 13 of at least one battery cell 1 by the application device 300, specifically to an area including the central region C formed in the depression 14. Referring also to FIG. 11, an example of the applied area AC and the adhesive free area AD is shown.

Further, the adhesive material 200 may be applied to at least 80%, at least 85%, at least 90%, or at least 95% of the total length of the one side 13 of the at least one battery cell 1. The length of the one side 13 of the at least one battery cell 1 may refer to the length of the one side 13 of the at least one battery cell 1 in the y-axis direction with reference to FIG. 9.

A method for manufacturing a battery module according to one aspect of the present disclosure may include an insertion process in which the battery cell unit 100 to which the adhesive material 200 is applied is inserted into the module housing 20. The battery cell unit 100 with the adhesive material 200 applied may mean the battery cell unit 100 with the adhesive material 200 applied to the one side 13 of at least one battery cell 1 among the battery cells 1 constituting the battery cell unit 100. Preferably, the battery cell unit 100 with the adhesive material 200 applied may be the battery cell unit 100 in which the adhesive material 200 is applied to the one side 13 of at least one battery cell 1 of all battery cells 1 constituting the battery cell unit 100.

In an insertion process of the method for manufacturing the battery module according to one aspect of the present disclosure, the module housing 20 may include the support plate 21 supporting the battery cell unit 100 and the side plates 22 provided in both edge regions of the support plate 21. Meanwhile, the side plates 22 may be provided in both parallel edge regions of the support plate 21.

FIG. 12 is a diagram illustrating at least a portion of an insertion process of a method for manufacturing a battery module according to one aspect of the present disclosure. Referring to FIG. 12, the module housing 20 may include the support plate 21 and two side plates 22 provided at both edge regions of the support plate 21. Specifically, referring to FIG. 12, the module housing 20 may include the support plate 21 and the two side plates 22 provided at both parallel edge regions of the support plate 21. Here, the module housing 20 may be an example of the lower housing 2b-1 in FIG. 3.

Referring to FIG. 12, the battery cell unit 100 to which the adhesive material 200 has been applied is being inserted into the module housing 20. The battery cell unit 100 to which the adhesive material 200 has been applied may be inserted into the module housing 20 via a transfer device. The transfer device may pick up the battery cell unit 100 to which the adhesive material 200 has been applied. Further, the transfer device may transfer the battery cell unit 100 to another space while picking up the battery cell unit 100 to which the adhesive material 200 has been applied.

The transfer device may pick up and transfer the battery cell unit 100 to which the adhesive material 200 has been applied such that the area to which the adhesive material 200 has been applied (the so-called bottom surface of the battery cell unit 100) may be in contact with the support plate 21 of the module housing 20.

Referring to FIG. 12, the battery cell unit 100 to which the adhesive material 200 has been applied may be inserted into the module housing 20 with the area, to which the adhesive material 200 has been applied, facing upward (in the +z direction). In this case, the module housing 20 may also have the bottom surface (the outer surface of the support plate 21) facing upward (in the +z direction) so that the battery cell unit 100 with the adhesive material 200 applied thereto may be inserted smoothly. In other words, the module housing 20 and the battery cell unit 100 to which the adhesive material 200 has been applied may be appropriately positioned so that the inner surface of the support plate 21 may be in contact with the bottom surface of the battery cell unit 100 to which the adhesive material 200 has been applied. The transfer device may position or transfer the module housing 20 and the battery cell unit 100 with the adhesive material 200 applied thereto to a specific location, and may perform the above-described insertion process.

Meanwhile, the transfer device may serve as the pressing device 500 for pressing to be described below. The pressing device 500 will be described below.

In FIG. 12, only the process of transferring the battery cell unit 100 with the adhesive material 200 applied is shown, but in another example, the transfer device may pick up the module housing 20. Furthermore, the transfer device may pick up the module housing 20 and transfer the module housing 20 to another space.

In the insertion process of the method for manufacturing the battery module according to one aspect of the present disclosure, each of a width WH and a height HH of the module housing 20 may be greater than or equal to a width WC and a height HC of the battery cell unit 100 to which the adhesive material 200 is applied.

In the insertion process of the method for manufacturing the battery module according to one aspect of the present disclosure, a length LH of the module housing 20 may be greater than, less than, or equal to a length LC of the battery cell unit 100 to which the adhesive material 200 is applied. Here, the length LH of the module housing 20 may refer to the size of the vertical distance between the respective inner surfaces of the two side plates 22.

Preferably, the length LH of the module housing 20 may be less than or equal to the length LC of the battery cell unit 100 to which the adhesive material 200 is applied. Furthermore, preferably, in the insertion process of the method for manufacturing the battery module according to one aspect of the present disclosure, the length LH of the module housing 20 may be greater than or equal to a length LC' of the battery cell unit 100, to which the adhesive material 200 is applied, in a pressed state to be described below.

If the measurement values of the above-described length L, width W, and height H are not constant in each configuration (the module housing 20 and the battery cell unit 100), the smallest values may be used as representative values. In another example, the average value may be used as a representative value.

In the insertion process of the method for manufacturing the battery module according to one aspect of the present disclosure, the battery cell unit 100 to which the adhesive material 200 has been applied may be inserted with each of the side plates 22 of the module housing 20 spread apart.

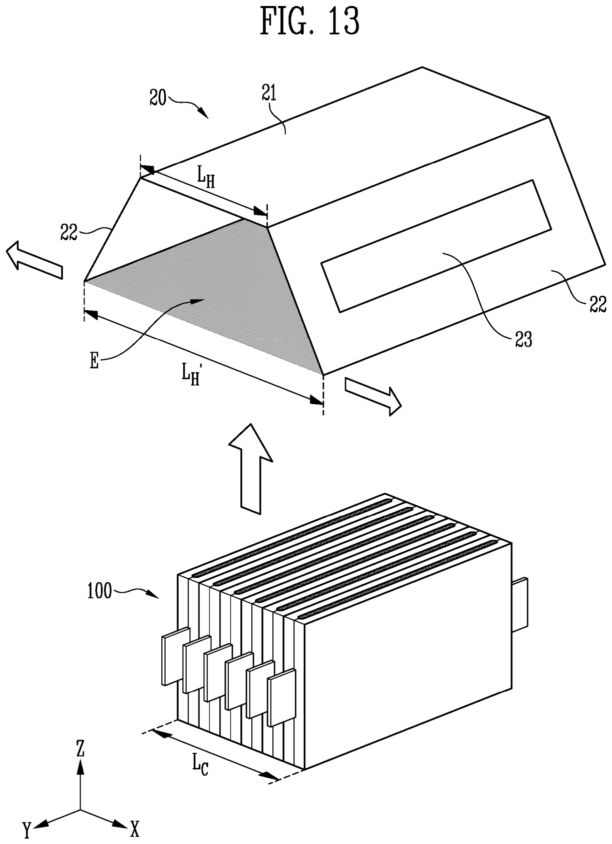

FIG. 13 is a diagram illustrating at least a portion of an insertion process of a method for manufacturing a battery module according to one aspect of the present disclosure. Referring to FIG. 13, each of the two side plates 22 of the module housing 20 may be spread apart, and the battery cell unit 100 having the adhesive material 200 applied thereto may be inserted with both side plates 22 spread apart. In the above, spreading the two side plates 22 apart may mean allowing both side plates 22 to have a larger vertical distance size than the original vertical distance size between the two side plates 22. In other words, spreading the two side plates 22 apart may mean increasing the length LH of the module housing 20. Here, by spreading the two side plates 22 apart, a length LH' of an entrance region E into which the battery cell unit 100 with the adhesive material 200 applied to both side plates 22 is inserted may be larger than the length LH of the module housing 20 before spreading the two side plates 22 apart. Further, by spreading the two side plates 22 apart, the length LH may gradually decrease as the two side plates 22 approach the support plate 21 as shown in FIG. 14. When the battery cell unit 100 with the adhesive material 200 applied is inserted with the two side plates 22 spread apart as described above, the insertion process may proceed more smoothly.

Meanwhile, in the insertion process of the manufacturing method of the battery module according to one aspect of the present disclosure, the length LH' of the entrance region E where the battery cell unit 100 with the adhesive material 200 applied to both side plates 22 is inserted may be larger than the length LC of the battery cell unit 100 with the adhesive material 200 applied.

Referring to FIG. 13, in the insertion process of the method for manufacturing the battery module according to one aspect of the present disclosure, an adsorption device 23 may be attached to at least a portion of each of the two side plates 22 and may exert an adsorption force on each of the side plates 22 in the direction in which the side plates 22 are spread apart. The side plates 22 may be spread apart by the adsorption device 23.

Referring to FIG. 13, in the insertion process of the method for manufacturing the battery module according to one aspect of the present disclosure, the side plate 22 may be an elastic body. Further, the side plate 22 may include at least an elastic body.

Referring to FIG. 13, in the insertion process of the method for manufacturing the battery module according to one aspect of the present disclosure, the side plates 22 are spread apart by pulling the side plates 22 within elastic limits, and the battery cell unit 100 with the adhesive material 200 applied thereto may be inserted into the module housing 20 with the side plates 22 spread apart.

In the insertion process of the method for manufacturing the battery module according to one aspect of the present disclosure, at least two faces of the battery cell unit 100 to which the adhesive material 200 is applied may be pressed. Specifically, at least two faces, including a main face, of the battery cell unit 100 to which the adhesive material 200 is applied may be pressed. Preferably, at least two faces, including both main faces, of the battery cell unit 100 to which the adhesive material 200 is applied may be pressed. In the above, the main face may mean, for example, a face having a large area in the pouch-type battery cell 1. Alternatively, the main face may be a face facing the electrode assembly in a direction in which the electrode assembly to be received inside the battery cell 1 is stacked.

FIG. 14 is a diagram illustrating at least a portion of an insertion process of a method for manufacturing a battery module according to one aspect of the present disclosure. Referring to FIG. 14, a location of a main surface M of the battery cell 1 is shown. Here, the main surface M of the battery cell 1 may be the main surface M of the battery cell unit 100. Also, referring to FIG. 14, the two main surfaces may be at positions opposite each other.

In the insertion process of the method for manufacturing the battery module according to one aspect of the present disclosure, at least two faces of the battery cell unit 100 to which the adhesive material 200 is applied may be pressed by the pressing device 500. The pressing device 500 may press the battery cell unit 100 to which the adhesive material 200 is applied by a pressing means such as a press. The pressing force may be set to a level sufficient to prevent damage to the battery cell unit 100 and to reduce the space between the battery cells 1 constituting the battery cell unit 100. Referring to FIG. 14, the pressing device 500 may be positioned to press the two main surfaces M and may then come into contact with the two main surfaces M to press the main surfaces M. In the above, pressing may mean reducing the length LC of the battery cell unit 100 to which the adhesive material 200 is applied.

In the insertion process of the method for manufacturing the battery module according to one aspect of the present disclosure, both main surfaces M of the battery cell unit 100 to which the adhesive material 200 has been applied may be pressed to facilitate the insertion process.

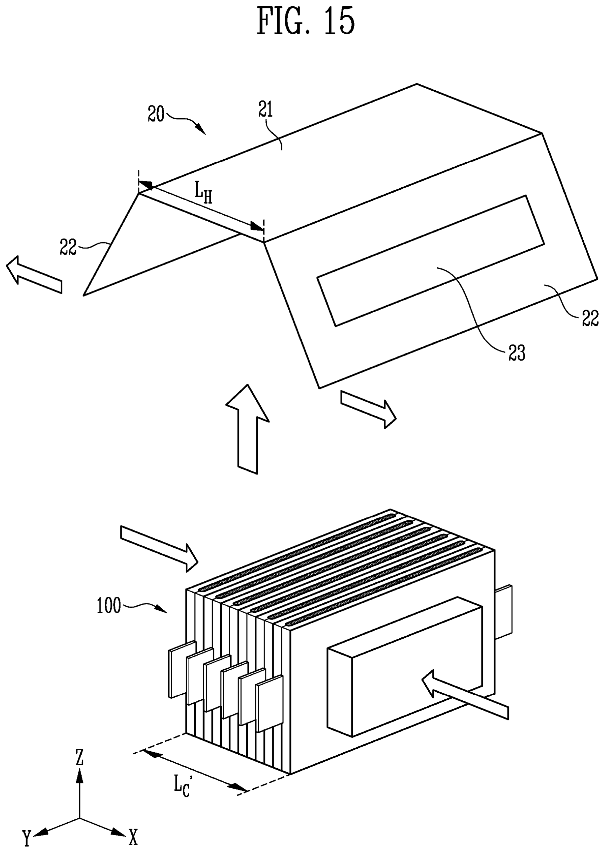

Meanwhile, the length LH of the module housing 20 may be greater than or equal to the length LC' of the battery cell unit 100 to which the adhesive material 200 is applied in a pressed state. Preferably, the length LH of the module housing 20 may be greater than the length LC' of the battery cell unit 100 with the adhesive material 200 applied thereto in the pressed state. Thereby, the insertion process may proceed more smoothly (see FIG. 15).

In the insertion process of the method for manufacturing the battery module according to one aspect of the present disclosure, the battery cell unit 100 may be inserted into the module housing 20 while at least two faces of the battery cell unit 100, to which adhesive material 200 has been applied, are pressed.

Further, in the insertion process of the method for manufacturing the battery module according to one aspect of the present disclosure, while at least two faces of the battery cell unit 100 to which the adhesive material 200 has been applied are pressed, the battery cell unit 100 may be inserted into the module housing 20 with the side plates 22 spread apart. FIG. 15 is a diagram illustrating at least a portion of the insertion process of the method for manufacturing a battery module according to one aspect of the present disclosure. Referring to FIG. 15, the two side plates 22 of the module housing 20 are spread apart by the adsorption device 23, and at least two faces of the battery cell unit 100 to which the adhesive material 200 is applied may be pressed through the pressing device 500. Specifically, at least two faces of the battery cell unit 100 to which the adhesive material 200 is applied, including the main face M, may be pressed by the pressing device 500. Preferably, on at least two sides, including both main faces M, of the battery cell unit 100 to which the adhesive material 200 is applied may be pressed by the pressing device 500 (see FIGS. 14 and 15).

Through the insertion process as described above, the present disclosure may provide a method for manufacturing a battery module which may prevent process-induced defects and improve the heat dissipation characteristics of the final product, and may prevent the adhesive material 200 from entering between the battery cells 1, thereby preventing process-induced defects and improving the safety of the final product.

Meanwhile, the pressing device 500 may serve as the above-described transfer device for transferring. In other words, the pressing device 500 and the transfer device are the same device (hereinafter, referred to as a combined device), and the combined device may perform functions of the transfer device and the pressing device 500. In other words, the combined device may press, position and transfer the battery cell unit 100, with the adhesive material 200 applied thereto, so as to insert the battery cell unit 100 to be inserted into the module housing 20.

FIG. 15 illustrates only the processes in which the applied battery cell unit 100 is pressed and transferred, and is then inserted into the module housing 20. However, in another example, the transfer device may pick up the module housing 20, position the same so that the bottom surface of the battery cell unit 100 and the inner surface of the support plate 21 may be in contact with each other, and then transfer the module housing 20 to insert the battery cell unit 100 into the module housing 20.

In the insertion process of the method for manufacturing the battery module according to one aspect of the present disclosure, the pressing force may be released when the pressed battery cell unit 100 comes into contact with the side plate 22. Here, the pressing device 500 may be moved in an up and down direction (i.e., the z direction in FIG. 15), and pressure may be applied in a left and right direction (i.e., the x direction in FIG. 15).

In the insertion process of the method for manufacturing the battery module according to one aspect of the present disclosure, the pressing force may be released when the battery cell unit 100 with the material 200 applied thereto, which is in the pressed state, comes into contact with the inner surface of the side plate 22. In the above, the term 'release' may cover gradually decreasing the pressing force or completely releasing the pressing force. Further, in the insertion process, when the battery cell unit 100 with the material 200 applied thereto in the pressed state begins to contact the inner surface of the side plate 22, the pressing device 500 may gradually decrease the pressing force. Further, the pressing device 500 may control such that the pressing force may be continuously reduced and then completely released when the battery cell unit 100 comes into contact with the inner surface of the support plate 21.

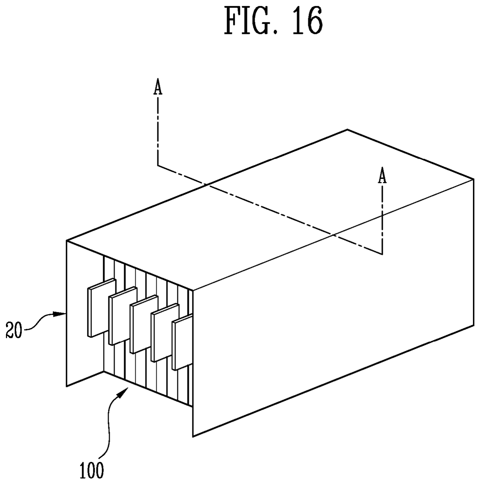

FIG. 16 is a diagram illustrating a semi-finished product of a battery module manufactured by a method for manufacturing a battery module according to one aspect of the present disclosure. The battery module 2 manufactured by the method for manufacturing the battery module according to one aspect of the present disclosure may prevent process-induced defects and improve the heat dissipation characteristics of the final product. Furthermore, the battery module 2 manufactured according to the above method for manufacturing the battery module may prevent the adhesive material 200 from entering between the battery cells 1, thereby preventing process-induced defects and improving the safety of the final product.

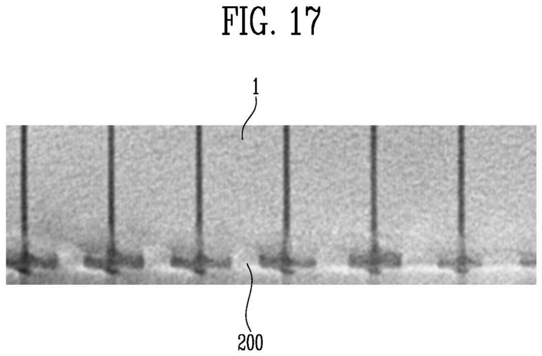

FIG. 17 is a computed tomography (CT) image of the bottom surface of a semi-finished battery module 2 manufactured by the method for manufacturing the battery module according to one aspect of the present disclosure (the cross-section AA' of FIG. 16). As shown in FIG. 17, the adhesive material 200 is neither applied asymmetrically nor introduced between the battery cells 1.

The present disclosure may provide the battery module 2 manufactured according to the above-described method for manufacturing the battery module. The method for manufacturing the battery module according to one aspect of the present disclosure may include a process of further assembling the configurations required for manufacturing the finished product, such as the upper housing 2b-2, the busbar 2c, and the inner and outer covers 2d-1 and 2d-2 to the semi-finished product of the above-described battery module 2 (see FIG. 2). According to the method for manufacturing the battery module according to one aspect of the present disclosure, the battery module 2 in the form of the finished product may be manufactured.

The above descriptions are merely examples applying the principles of the present disclosure, and various other configurations may be further included without departing from the scope of the present disclosure.

## Claims

1. A method for manufacturing a battery module, the method comprising:
an application process of applying an adhesive material to at least one surface of a battery cell unit,
wherein a plurality of battery cells are stacked in the battery cell unit, and the battery cells each comprise a cell assembly and at least one tab protruding from the cell assembly, and
wherein in the application process, the adhesive material is applied to one side of at least one battery cell from which the at least one tab is free of any protruding tabs.

2. The method according to claim 1, wherein in the application process, the adhesive material is applied to form an applied area on at least a portion of a central region of the one side of the at least one battery cell.

3. The method according to claim 2, wherein in the application process, the adhesive material is applied to form an adhesive free area on at least a portion of a region of both ends of the one side of the at least one battery cell.

4. The method according to claim 2, wherein the one side of the at least one battery cell comprises a depression, and
wherein at least a portion of the depression is present in the applied area.

5. The method according to claim 4, wherein the central region of the one side of the at least one battery cell is formed in the depression.

6. The method according to claim 1, further comprising obtaining a profile of the one side of the at least one battery cell,
wherein the application process comprises determining the amount of adhesive material to be applied according to the obtained profile.

7. The method according to claim 6, wherein the profile of the one side of the at least one battery cell is obtained by laser irradiation.

8. The method according to claim 6, wherein obtaining the profile further comprises deriving a central region of the one side of the at least one battery cell.

9. The method according to claim 1, further comprising an insertion process of inserting the battery cell unit with the adhesive material applied thereto into a module housing.

10. The method according to claim 9, wherein the module housing comprises a support plate supporting the battery cell unit and side plates provided at both edge regions of the support plate, and
wherein in the insertion process, the battery cell unit is inserted into the module housing with the side plates of the module housing spread apart.

11. The method according to claim 10, wherein each of the side plates of the module housing comprises an elastic body with an elastic limit, and
wherein in the insertion process, the side plates are spread apart by pulling the side plates within the elastic limit, and the battery cell unit with the adhesive material applied thereto is inserted into the module housing with the side plates spread apart.

12. The method according to claim 10, wherein in the insertion process, the battery cell unit is inserted into the module housing while at least two faces of the battery cell unit are pressed.

13. The method according to claim 12, wherein in the insertion process, the pressing is released when the pressed battery cell unit contacts the side plates.

14. The method according to claim 1, wherein the adhesive material comprises one or more selected from the group consisting of silicone resin, acrylic resin, urethane resin, and epoxy resin.
